# EUROPÄISCHE PATENTSCHRIFT

(11) **EP 3 922 898 B1**
(45) Veröffentlichungstag und Bekanntmachung des Hinweises auf die Patenterteilung: **30.11.2022**
(21) Anmeldenummer: 21172771.4
(22) Anmeldetag: 07.05.2021
(51) Int. Cl.: F16P 3/08, F16P 3/10

(54) **BEDIENVORRICHTUNG FÜR EINE SICHERHEITSZUHALTUNG**
CONTROL DEVICE FOR A SAFETY CLOSURE
DISPOSITIF DE COMMANDE POUR UNE GÂCHETTE DE SÉCURITÉ

(30) Priorität: 09.06.2020 DE 102020115307
(43) Veröffentlichungstag der Anmeldung: 15.12.2021
(73) Patentinhaber: SICK AG, 79183 Waldkirch (DE)
(72) Erfinder: Schunke, Stefan, 79102 Freiburg (DE); Leins, Stephan, 72461 Albstadt (DE); Trouvain, Markus, 66450 Bexbach (DE)

(56) Entgegenhaltungen:
- EP-A1- 1 847 891
- WO-A1-2020/087099
- DE-A1-102005 014 122
- DE-A1-102018 121 445
- JP-A- 2018 068 324

## Beschreibung

Die Erfindung betrifft eine Bedienvorrichtung für eine Sicherheitszuhaltung einer beweglichen trennenden Schutzeinrichtung zum Absichern einer Maschine nach dem Oberbegriff von Anspruch 1.

Die zentrale Aufgabe der Sicherheitstechnik ist es, Leben und Gesundheit von Personen zu schützen, die sich im Umfeld von Gefahrenquellen wie einer Maschine aufhalten. Es gibt hier strenge, durch Sicherheitsnormen vorgegebene Vorschriften, wie Sensoren und Aktoren sich verhalten müssen, damit es nicht durch Fehler oder unerwartetes Verhalten zu Unfällen kommt. Dazu zählen ein redundanter, insbesondere zweikanaliger Aufbau und Tests, wobei die konkreten Maßnahmen von der Anwendung und dem zu erreichenden Sicherheitsniveau abhängen. Die Begriffe Sicherheit und sicher sind überall in dieser Beschreibung im Sinne derartiger Sicherheitsnormen für die Maschinensicherheit beziehungsweise den Personenschutz zu verstehen.

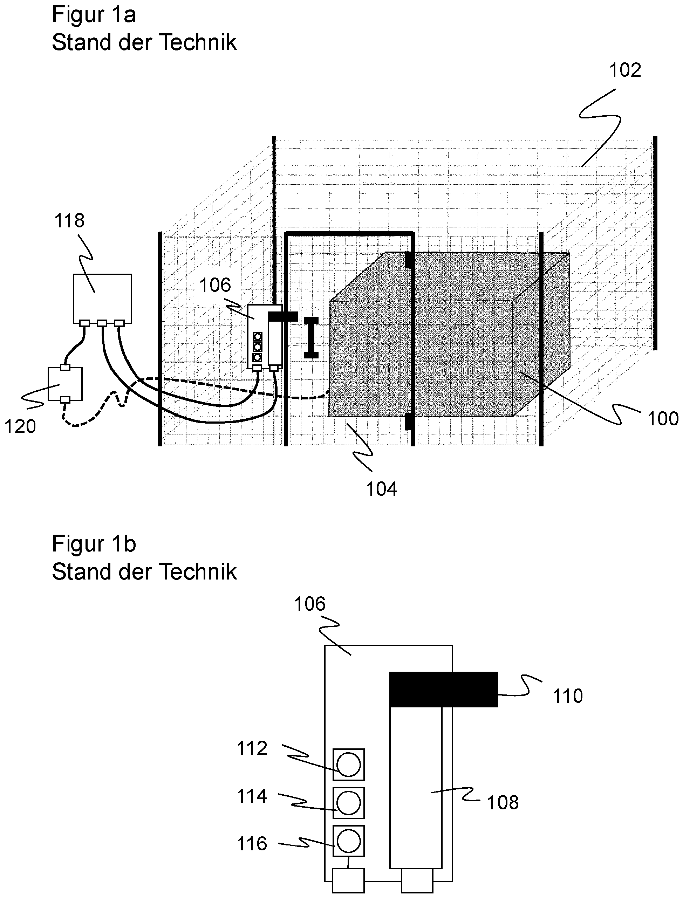

Figur 1a zeigt eine Maschine 100, beispielsweise einen Roboter oder eine sonstige etwa in der Fabrikautomation eingesetzte Maschine, deren Arbeitsbewegungen eine Person in ihrem Umfeld gefährden. Deshalb ist die Maschine 100 von einer mechanischen Absperrung 102 beziehungsweise einem Schutzzaun umgeben. Gelegentlich ist es dennoch für Wartungen und dergleichen erforderlich, dass eine Person Zugang zu der Maschine 100 erhält. Deshalb ist in der Absperrung 102 eine sogenannte bewegliche trennende Schutzeinrichtung 104 vorgesehen, typischerweise in Form einer Tür oder Klappe.

Um die Details der Elemente 106 für die Absicherung der beweglichen trennenden Schutzeinrichtung 104 besser erkennen zu können, sind diese in Figur 1b nochmals vergrößert dargestellt. In manchen Anwendungen genügt ein Sicherheitsschalter, der die Maschine 100 beim Öffnen der beweglichen trennenden Schutzeinrichtung 104 stillsetzt. Das reicht aber nicht mehr aus, wenn nicht gewährleistet ist, dass die gefahrbringenden Bewegungen der Maschine 100 rechtzeitig angehalten sind, bevor eine Person nach dem Öffnen der Maschine 100 zu nahe kommt. Dann wird eine Sicherheitszuhaltung 108 eingesetzt, die den Zugang erst freigibt, wenn die gefahrbringende Bewegung der Maschine 100 zum Stillstand gekommen ist.

Die Sicherheitszuhaltung 108 umfasst einen Sperrriegel 110, der wahlweise die bewegliche trennende Schutzeinrichtung 104 verriegelt oder entriegelt. Zur Bedienung der Sicherheitszuhaltung 108 sind daneben mehrere Taster montiert, nämlich ein Stoppanforderungstaster 112, ein Resettaster 114 und ein Wiederanlauftaster 116. Sowohl die Sicherheitszuhaltung 108 selbst als auch die Taster 112, 114, 116 sind an eine Sicherheitssteuerung 118 angeschlossen. Die Sicherheitssteuerung 118 wiederum ist über ein Sicherheitsrelais 120 oder eine sonstige Maschinenschnittstelle mit der Maschine 100 verbunden, um sie im Gefährdungsfall sicherheitsgerichtet stillzusetzen.

Die Verarbeitung der Signale von den Tastern 112, 114, 116 sowie die Ansteuerung der Sicherheitszuhaltung 108 und des Sicherheitsrelais 120 ist Aufgabe der Sicherheitssteuerung 118. Um Zugang zu der Maschine 100 zu erhalten, wird der Stoppanforderungstaster 112 betätigt, woraufhin die Sicherheitssteuerung 118 über das Sicherheitsrelais 120 das Anhalten der Maschine 100 initiiert. Damit der Stillstand der Maschine 100 tatsächlich sichergestellt ist, wartet die Sicherheitssteuerung 118 anschließend eine festgelegte Wartezeit ab, die beispielsweise vorab über eine Stoppzeitmessung bestimmt wurde. Alternativ wird ein Stoppsignal der Maschine 100 abgewartet, das beispielsweise über einen Stillstandswächter oder eine sichere Geschwindigkeitsüberwachung erfasst wird. Nach dem Stillstand der Maschine 100 sendet die Sicherheitssteuerung 118 einen Befehl zum Öffnen an die Sicherheitszuhaltung 108, die daraufhin den Sperrriegel 110 öffnet. Die bewegliche trennende Schutzeinrichtung 104 kann jetzt geöffnet und der Bereich der Maschine 100 betreten werden.

Soll die Maschine 100 wieder in Betrieb genommen werden, etwa nach abgeschlossenen Arbeiten an der Maschine 100, so wird zunächst die bewegliche trennende Schutzeinrichtung 104 wieder geschlossen. Die Sicherheitszuhaltung 108 erkennt den geschlossenen Zustand und zeigt das der Sicherheitssteuerung 118 an, die daraufhin einen Reset der Sicherheitskomponenten freigibt und dies auch an dem Resettaster 114 durch Blinken oder ähnliches signalisieren kann. Mit Betätigen des Resettasters 114 wird der ordnungsgemäße Zustand quittiert und der Maschinenwiederanlauf erlaubt. Die Sicherheitssteuerung 118 erfasst das Resetsignal des Resettasters 114 und gibt der Sicherheitszuhaltung 108 den Befehl zur Verriegelung. Erst wenn von der Sicherheitszuhaltung 108 an ihren sicheren Ausgängen das erfolgte Aktivieren der Zuhaltung sicher zurückgemeldet wurde, gibt die Sicherheitssteuerung 118 den Wiederanlauf der Maschine 100 frei. Der Wiederanlauf erfolgt automatisch oder alternativ erst durch einen weiteren Bedienbefehl über den Wiederanlauftaster 116.

Somit besteht die herkömmliche Sicherheitslösung aus der Sicherheitszuhaltung 108, den Tastern 112, 114, 116 und der koordinierenden Sicherheitssteuerung 118. Im Stand der Technik sind Kombinationen von Teilsystemen bekannt. Dabei werden die Taster 112, 114, 116 in die Sicherheitszuhaltung 108 integriert, teilweise auch in die programmierbare Sicherheitssteuerung 118.

Für größere oder komplexere Anlagen und Maschinen 100 ist die herkömmliche Lösung oft angemessen, da dort ohnehin eine programmierbare Sicherheitssteuerung 118 benötigt wird, um weitere Sicherheitsfunktionen zu steuern und zu koordinieren. Bei einfachen Maschinen 100 können jedoch die benötigten Sicherheitssensoren, wie Sicherheitsschalter oder Sicherheitslichtgitter, direkt an ein Sicherheitsrelais angeschlossen werden. Wird es aber erforderlich, eine Sicherheitszuhaltung 108 hinzuzunehmen, weil eine gefahrbringende Bewegung nicht schnell genug gestoppt werden kann, muss doch wieder eine Sicherheitssteuerung 118 eingesetzt werden. Das verursacht hohe Kosten, vor allem durch die Sicherheitssteuerung 118, welche oftmals der einfachen Steuerungsaufgabe nicht angemessen sind. Außerdem können Fehler bei der Programmierung der Sicherheitssteuerung 118 in Zusammenhang mit der Sicherheitszuhaltung 108 auftreten, die womöglich zu gefährlichen Zuständen und in deren Folge zu ernsthaften Verletzungen führen.

Aus der DE 10 2008 060 004 A1 und dem entsprechenden Produkt von deren Anmeldern ist ein Sicherheitsschalter zum Erzeugen eines Anlagenfreigabesignals in Abhängigkeit von der Position einer beweglichen Schutztür bekannt. Die Bedienfunktionalität ist in die Zuhaltung integriert und nicht nachrüstbar. Eine Konfiguration beispielsweise einer Wartezeit ist nicht vorgesehen und wäre nur über eine angeschlossene Sicherheitssteuerung möglich. In einer Ausführungsform ist ein Transponder vorgesehen, über den eine Person Bedienrechte nachweist und der als Alternative zu Tastern eine berührungslose Türfreigabe ermöglicht.

Die DE 10 2018 121 445 A1 offenbart ein Zugangskontrollverfahren zu einem Gefahrenbereich einer Maschine. Eine Person, die den Gefahrenbereich betreten möchte, identifiziert sich an einem Steuergerät mit Lesegerät mittels eines elektronischen Identifizierungsgeräts, beispielsweise eines Smartphones. Es wird ein Token ausgelesen und dreifach gespeichert, nämlich in dem Steuergerät, dem Identifizierungsgerät und einem sogenannten stationären elektronischen Schlüssel. Nach einer Quittierung wird die Tür nur geöffnet, wenn die drei Token übereinstimmen. Die Maschine kann danach erst wieder anlaufen, nachdem diese Person sich abgemeldet hat. Auf diese Weise wird verhindert, dass sich beim Wiederanlauf Personen im Gefahrenbereich befinden.

In der DE 10 2005 014 122 A1 wird eine Sicherheitsschaltvorrichtung zum sicheren Abschalten eines elektrischen Verbrauchers offenbart, beispielsweise eines Roboters. Dabei sind zwei Sicherheitsschaltvorrichtungen miteinander verbunden, wobei an die eine ein Schutztürsensor einer den Arbeitsraum dies Roboters sichernden Schutztür und an die andere ein Not-Aus-Taster angeschlossen sein kann.

Es ist daher Aufgabe der Erfindung, die Absicherung einer beweglichen trennenden Schutzeinrichtung zu verbessern.

Diese Aufgabe wird durch eine Bedienvorrichtung für eine Sicherheitszuhaltung einer beweglichen trennenden Schutzeinrichtung zum Absichern einer Maschine nach Anspruch 1 gelöst. Die Bedienvorrichtung weist einen ersten sicheren Anschluss zur Verbindung mit der Sicherheitszuhaltung und einen zweiten sicheren Anschluss zur Verbindung mit einer Sicherheitsschaltvorrichtung auf. Die Sicherheitsschaltvorrichtung ist vorzugsweise sehr einfach und nicht programmierbar, beispielsweise lediglich ein Sicherheitsrelais oder auch ein Stoppeingang der Maschine selbst. Im Prinzip kann auch eine Sicherheitssteuerung als Sicherheitsschaltvorrichtung fungieren, aber es wird keinerlei flexible oder in irgendeinem Sinne intelligente Steuerungsfunktion benötigt, es ist lediglich auf sichere Weise ein Stillsetzbefehl an die Maschine weiterzugeben, wofür es ausreicht, die Maschine bei Anliegen eines entsprechenden Abschaltsignals stromlos zu setzen. Die Bedienvorrichtung umfasst weiterhin zumindest ein erstes Bedienelement für eine Stoppanforderung an die Maschine und damit zugleich die Anforderung, die Sicherheitszuhaltung zu entriegeln, um die bewegliche trennende Schutzeinrichtung öffnen zu können.

Die Erfindung geht von dem Grundgedanken aus, die Bedienvorrichtung als eine Art Taster-Logikmodul auszugestalten, in dem die erforderliche Sicherheitslogik in das Bauteil mit dem mindestens ersten Bedienelement integriert ist. Das gemeinsame Bedienmodul umfasst folglich das mindestens erste Bedienelement, die beiden sicheren Anschlüsse und eine integrierte sichere Steuereinheit mit dem mindestens einen erforderlichen Logikbaustein für die Umsetzung der Sicherheitslogik. Das Bedienmodul weist vorzugsweise ein gemeinsames Gehäuse auf. Die integrierte sichere Steuereinheit ist zumindest für den Ablauf bei Öffnen der beweglichen trennenden Schutzeinrichtung ausgebildet oder programmiert und gibt dementsprechend bei Betätigen des ersten Bedienelements eine Stoppanforderung an dem zweiten Anschluss und somit einen Stoppbefehl an die dort über die Sicherheitsschaltvorrichtung verbundene Maschine und dann einen Entriegelungsbefehl an dem ersten Anschluss und somit an die Sicherheitszuhaltung aus.

Die Erfindung hat den Vorteil, dass eine einfache Sicherheitslogik mit den notwendigen Bedienelementen zur Verfügung gestellt wird, die eine Sicherheitssteuerung überflüssig macht. Der Montageaufwand ist minimal, denn das Verbauen eines Tastermoduls zur Bedienung einer Sicherheitszuhaltung war auch bisher erforderlich. Zusätzlicher Platzbedarf entsteht nicht, und auch der Verdrahtungsaufwand ist gering, da die Sicherheitslogik autark und dezentral arbeitet. Die Bedienvorrichtung wird meist in unmittelbarer Nähe zu der Sicherheitszuhaltung angebracht und kann direkt verbunden werden, es ist lediglich ein Kabel zu der Sicherheitsschaltvorrichtung beispielsweise in einem Schaltschrank erforderlich. Die Bedienvorrichtung ist von der Sicherheitszuhaltung unabhängig und damit beliebig kombinierbar oder auch nachrüstbar. Durch die reduzierte Komplexität und einfache Anwendbarkeit werden mit einer einfachen und kostengünstigen Lösung Fehler und daraus folgende Gefahren verhindert.

Die Bedienvorrichtung weist bevorzugt ein zweites Bedienelement für eine Rücksetzanforderung auf. Mit dem Rücksetzen (Reset) soll die Maschine wieder anlaufen können, wenn kein Zugang zu der Maschine mehr benötigt wird. Vor der Rücksetzanforderung überzeugt sich der Verantwortliche vom ordnungsgemäßen Zustand im Umfeld der Maschine. Vorzugsweise ist ein Betätigen des zweiten Bedienelements überhaupt nur freigegeben, wenn die Sicherheitszuhaltung erkannt hat, dass die bewegliche trennende Schutzeinrichtung geschlossen ist.

Die sichere Steuereinheit ist bevorzugt dafür ausgebildet, bei Betätigen des zweiten Bedienelements einen Verriegelungsbefehl an dem ersten Anschluss auszugeben, auf eine Bestätigung der Verriegelung der Sicherheitszuhaltung zu warten und dann die Maschine an dem zweiten Anschluss freizugeben. Die Sicherheitslogik umfasst in dieser Ausführungsform auch den Ablauf für das Zurücksetzen der Sicherheitskomponenten, damit die Maschine wieder anlaufen kann. Dabei wird die Verriegelung der Sicherheitszuhaltung ausgelöst und auf deren sichere Bestätigung gewartet. Somit ist sichergestellt, dass nun die bewegliche trennende Schutzeinrichtung geschlossen ist und nicht mehr geöffnet werden kann.

Die Bedienvorrichtung weist bevorzugt ein drittes Bedienelement für eine Wiederanlaufanforderung auf. Damit wird die Maschine nach einem Reset von Hand wieder gestartet, das dritte Bedienelement gibt einen entsprechenden Startbefehl. Alternativ kann die Maschine nach einem Reset automatisch gestartet werden.

Die sichere Steuerungseinheit ist bevorzugt fix programmiert. Noch bevorzugter können die vorgesehenen Abläufe bei Betätigen eines Bedienelements nicht programmiert oder umprogrammiert werden. Die Sicherheitslogik ist somit ab Werk festgelegt und nicht veränderbar. Es sind zumindest keinerlei Schnittstellen für eine Neuprogrammierung vorgesehen, vorzugsweise ist die sichere Steuerungseinheit insgesamt nicht-programmierbar, jedenfalls nicht mehr nach Werk. Damit ist die Bedienvorrichtung mit der sicheren Steuerungseinheit besonders einfach einzusetzen und fehlerresistent. Eine nicht-programmierbare integrierte sichere Steuerungseinheit ist wesentlich preisgünstiger als beispielsweise eine Sicherheitssteuerung, die zwar durch ihre variable Programmierung viel flexibler, für die hier beschriebenen Anwendungen aber zu aufwändig ist.

Die sichere Steuerungseinheit ist vorzugsweise zum Konfigurieren von Parametern ausgebildet. Das Setzen von Werten für fest vorgesehene Parameter ist kein Programmieren, da die Sicherheitslogik nicht verändert wird. Anders ausgedrückt kann die Sicherheitslogik fix für das Setzen oder Verändern von Parametern programmiert werden. Veränderbare Parameter ermöglichen eine einfache Anpassung an die Anwendung.

Die sichere Steuerungseinheit verwendet vorzugsweise als Parameter eine Wartezeit zwischen Stoppanforderung und Entriegelungsbefehl. Die Stoppanforderung führt möglichst ohne jede Verzögerung dazu, dass ein Stillsetzen der Maschine initiiert wird. Allerdings dauert es dann, bis die Maschine tatsächlich zum Stillstand gekommen ist. Die Verzögerung lässt sich über die Wartezeit konfigurieren.

Die Bedienvorrichtung weist bevorzugt ein viertes Bedienelement zum Einstellen eines Parameters auf, insbesondere der Wartezeit. Das vierte Bedienelement ist beispielsweise ein DIP-Schalter oder ein Drehschalter.

Die Bedienvorrichtung weist bevorzugt eine IO-Link-Schnittstelle zum Einstellen eines Parameters über IO-Link auf, insbesondere der Wartezeit. Das erlaubt es, auf das vierte Bedienelement zu verzichten und ohne direkten Zugang durch IO-Link-Zugriff Parameter zu verändern. Auf die IO-Link-Schnittstelle kann durch die ohnehin vorhandenen Anschlüsse oder Steckverbinder zugegriffen werden.

Die Bedienvorrichtung weist bevorzugt eine NFC-Schnittstelle zum Einstellen eines Parameters über NFC (Near Field Communication) auf. Das ist eine weitere komfortable und nun drahtlose Art, Parameter zu setzen und zu verändern. Es ist denkbar, mehrere der genannten Konfigurationsmöglichkeiten zu kombinieren beziehungsweise andere Schnittstellen anzubieten.

Die Bedienvorrichtung weist bevorzugt einen dritten Anschluss für eine Verbindung mit einem Stillstandswächter auf, wobei die sichere Steuerungseinheit dafür ausgebildet ist, nach einer Stoppanforderung auf eine Stillstandsbestätigung am dritten Anschluss zu warten, bevor ein Entriegelungsbefehl an dem ersten Anschluss ausgegeben wird. Das ist eine Alternative zu Vorgabe oder Parametrierung einer Wartezeit. Der Stillstandswächter überwacht, wann die Maschine tatsächlich ihre gefährlichen Bewegungen eingestellt hat, und meldet das auf sichere Weise zurück. Dadurch muss keine angemessene Wartezeit bestimmt werden, die auch Sicherheitspuffer enthalten muss, aber dafür bedeutet der Stillstandswächter Zusatzkosten und Mehraufwand bei der Montage.

In vorteilhafter Weiterbildung ist eine Sicherheitsvorrichtung mit einer erfindungsgemäßen Bedienvorrichtung, einer an dem ersten Anschluss mit der Bedienvorrichtung verbundenen Sicherheitszuhaltung, die an einer beweglichen trennenden Schutzeinrichtung montiert ist, und einer an dem zweiten Anschluss mit der Bedienvorrichtung verbundenen Sicherheitsschaltvorrichtung vorgesehen. Die Bedienvorrichtung steuert die Abläufe der Sicherheitsvorrichtung bei Betätigen ihrer Bedienelemente mit ihrer integrierten Sicherheitslogik.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1a: eine Darstellung einer herkömmlichen Absicherung einer Maschine mit einer durch eine Sicherheitszuhaltung verriegelten Schutztür;
- Fig. 1b: eine Detailansicht zu Figur 1a der Sicherheitszuhaltung und der Bedienele-mente dafür;
- Fig. 2a: eine Darstellung einer Absicherung einer Maschine mit einer durch Sicher-heitszuhaltung verriegelten Schutztür gemäß einer Ausführungsform der Er-findung;
- Fig. 2b: eine Detailansicht zu Figur 2a einer erfindungsgemäßen Bedienvorrichtung für die Sicherheitszuhaltung;
- Fig. 3a: eine Darstellung einer Absicherung einer Maschine mit einer durch Sicher-heitszuhaltung verriegelten Schutztür gemäß einer weiteren Ausführungs-form der Erfindung mit zusätzlichem Stillstandswächter; und
- Fig. 3b: eine Detailansicht zu Figur 3a einer erfindungsgemäßen Bedienvorrichtung für die Sicherheitszuhaltung mit Anschluss für den Stillstandswächter.

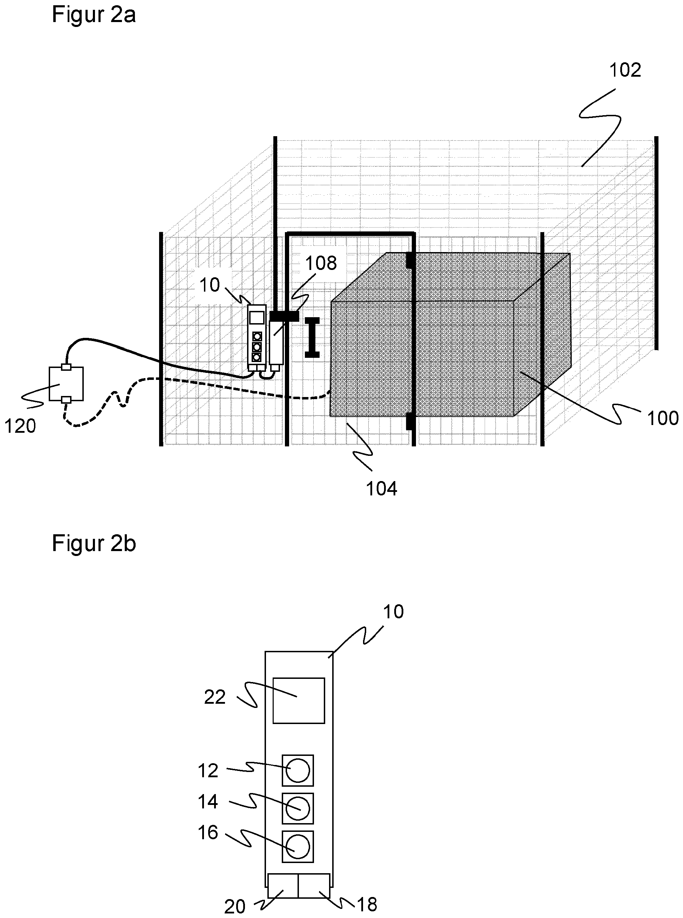

Figur 2a zeigt eine Absicherung einer Maschine 100 in einer Ausführungsform der Erfindung. Die Anwendungssituation und die Abläufe ähneln denjenigen, die einleitend beschrieben wurden, und daher wird ergänzend auf die Beschreibung der Figuren 1a-b verwiesen. Die Maschine 100 ist nur ganz abstrakt dargestellt und steht stellvertretend für jegliche abzusichernde Gefahrenstelle, beispielsweise eine Maschine oder kleine Anlage in der Fabrikautomation. Eine mechanische Absperrung 102 beziehungsweise ein Schutzzaun verhindert, dass sich Personen der Maschine 100 nähern. Um doch, beispielsweise für Wartungen, einen temporären Zugang zu ermöglichen, ist eine allgemein als bewegliche trennende Schutzeinrichtung 104 bezeichnete Tür oder Klappe vorgesehen, die eine offene und eine geschlossene Position einnehmen kann.

Während des Betriebs der Maschine muss die bewegliche trennende Schutzeinrichtung 104 geschlossen bleiben, und deshalb wird sie von einer Sicherheitszuhaltung 108 verriegelt. Die Sicherheitszuhaltung 108 macht somit wahlweise den Übergang der beweglichen trennenden Schutzeinrichtung 104 von der offenen in die geschlossene Position möglich oder nicht. Die Sicherheitszuhaltung 108 erkennt außerdem, ob die bewegliche trennende Schutzeinrichtung 104 geschlossen ist, sie kann auf sichere Weise einen Verriegelungsbefehl entgegennehmen und ausführen sowie eine sichere Rückmeldung über das Einnehmen des Verriegelungszustands geben.

Eine Bedienvorrichtung 10 für die Sicherheitszuhaltung 108 ist vorzugsweise in deren Nähe montiert und in Figur 2b nochmals vergrößert dargestellt. In der dargestellten Ausführungsform weist sie drei Bedienelemente oder Taster auf, nämlich einen Stoppanforderungstaster 12, einen Resettaster 14 und einen Wiederanlauftaster 16. Der Stoppanforderungstaster 12 initiiert eine Stillsetzung der Maschine 100 und Freigabe der beweglichen trennenden Schutzeinrichtung 104 und damit die primäre Sicherheitsfunktion. Auch der Resettaster 14 ist vorzugsweise vorzusehen, da sonst die Maschine 100 nach einem Öffnen der beweglichen trennenden Schutzeinrichtung 104 nicht wieder sicher in Betrieb genommen werden könnte. Der Wiederanlauftaster 16 ist optional, da ein Wiederanlauf der Maschine 100 nach einem Reset auch automatisch erfolgen kann.

Die Bedienvorrichtung 10 weist einen ersten sicheren Anschluss 18 und einen zweiten sicheren Anschluss 20 auf. Die Anschlüsse 18, 20 sind vorzugsweise zweikanalig und weisen beispielsweise jeweils ein OSSD-Paar auf (Output Signal Switching Device). Über den ersten sicheren Anschluss 18 ist die Bedienvorrichtung mit der Sicherheitszuhaltung 108 verbunden, um sie auf sichere Weise zu entriegeln und verriegeln und eine sichere Rückmeldung über den Schließ- und Verriegelungszustand zu erhalten. An dem zweiten sicheren Anschluss 20 ist die Maschine 100 verbunden, um sie stillsetzen zu können, hier mittelbar über eine Sicherheitsschaltvorrichtung 120, die vorzugsweise ein einfaches Sicherheitsrelais ist.

Im Unterschied zu der herkömmlichen Lösung gemäß Figur 1a-b ist keine Sicherheitssteuerung 118 erforderlich. Zwar kann die Sicherheitsschaltvorrichtung 120 prinzipiell auch eine Sicherheitssteuerung 118 sein, aber diese fungiert dann wie die Sicherheitsschaltvorrichtung 120 lediglich als Sicherheitsrelais. Die einzige von der Sicherheitsschaltvorrichtung 120 benötigte Funktionalität ist, die Maschine 100 auf ein entsprechendes Signal an dem zweiten sicheren Anschluss 20 hin anzuhalten beziehungsweise stromlos zu setzen.

Die Sicherheitslogik, die herkömmlich in einer externen Sicherheitssteuerung 118 implementiert war, ist erfindungsgemäß in einer internen sicheren Steuereinheit 22 der Bedienvorrichtung 10 untergebracht. Damit ist die Bedienvorrichtung 10 ein gemeinsames Bedienmodul, in das neben den Tastern 12, 14, 16 und Anschlüssen 18, 20 auch die erforderliche Sicherheitslogik integriert ist, die die zur Zuhaltungs- und Relaisansteuerung notwendigen Funktionen schon autark und ohne Unterstützung einer Sicherheitssteuerung 118 oder einer irgendwie intelligenten oder programmierbaren Sicherheitsschaltvorrichtung 120 abdecken kann. Die Bedienvorrichtung 10 ist vorzugsweise mit allen genannten Komponenten in einem gemeinsamen Gehäuse untergebracht.

Die Sicherheitslogik in der internen sicheren Steuereinheit 22 ist vorzugsweise fest programmiert. Lediglich das Setzen oder Verändern von Parametern kann erlaubt sein. Das widerspricht nicht der festen Programmierung, da das feste Programm die Konfigurationsmöglichkeit vorsieht. Die Konfiguration kann sich auf den Wert eines einzigen Parameters beschränken, nämlich eine einstellbare Zeitkonstante für die Wartezeit zwischen Betätigen des Stoppanforderungstasters 12 und Entriegelungsbefehl an die Sicherheitszuhaltung 108. Alle weiteren Logikfunktionen sind vorzugsweise fest und unveränderlich einprogrammiert.

Die Konfiguration kann über nicht dargestellte Bedienelemente der Bedienvorrichtung 10 erfolgen, beispielsweise DIP-Schalter oder Drehschalter. Alternativ oder zusätzlich kann die Konfiguration über eine IO-Link Verbindung erfolgen, die an einem der Anschlüsse 18, 20 beziehungsweise Steckverbinder zur Verfügung steht. Eine weitere Möglichkeit ist eine Konfiguration über Near Field Communication (NFC).

Die in der internen Sicherheitslogik hinterlegten Abläufe unterscheiden sich vorzugsweise aus Anwendersicht nicht von denjenigen bei der herkömmlichen Lösung, die zu den Figuren 1a-b erläutert wurden und deren Beschreibung auch hier ergänzend herangezogen werden kann. Unterschiede bestehen insbesondere in dem Verzicht auf die Sicherheitssteuerung 118, einer vereinfachten Montage und Inbetriebnahme, der bereits fertig vorgegebenen Programmierung und den Konfigurationsmöglichkeiten für Parameter beziehungsweise die Wartezeit.

Möchte also ein Wartungstechniker oder eine sonstige Bedienperson Zugang zu der Maschine 100 erhalten, so wird der Stoppanforderungstaster 12 betätigt. Das erzeugt ein sicheres Stoppsignal an dem zweiten sicheren Anschluss 20, mit dem über die Sicherheitsschaltvorrichtung 120 das Stillsetzen der Maschine 100 initiiert wird. Die Sicherheitslogik der internen sicheren Steuereinheit 22 verzögert nun um die Wartezeit und gibt dann an ihrem ersten sicheren Anschluss 18 einen Entriegelungsbefehl an die Sicherheitszuhaltung 108 aus. Die Bedienperson kann nun die bewegliche trennende Schutzeinrichtung 104 öffnen und hat damit Zugang zu der Maschine 100.

Die Bedienperson verlässt nach getaner Arbeit den geschützten Bereich der Maschine 100 wieder und schließt die bewegliche trennende Schutzeinrichtung 104. Sobald die Sicherheitszuhaltung 108 der Sicherheitslogik dies meldet, wird der Resettaster 14 freigegeben. Die Bedienperson vergewissert sich noch einmal, dass alles in ordnungsgemäßem Zustand ist und die Maschine 100 aus ihrer Sicht wieder in Betrieb gehen kann, und betätigt dann den Resettaster 14. Die Sicherheitslogik erfasst das Resetsignal und gibt am ersten sicheren Anschluss 18 einen Verriegelungsbefehl an die Sicherheitszuhaltung 108 aus. Sobald diese die erfolgte Verriegelung auf sichere Weise zurückmeldet, gibt die Sicherheitslogik die Maschine 100 an ihrem zweiten Anschluss 20 für den Wiederanlauf frei. Der Wiederanlauf erfolgt automatisch oder alternativ durch Betätigen des Wiederanlauftasters 16.

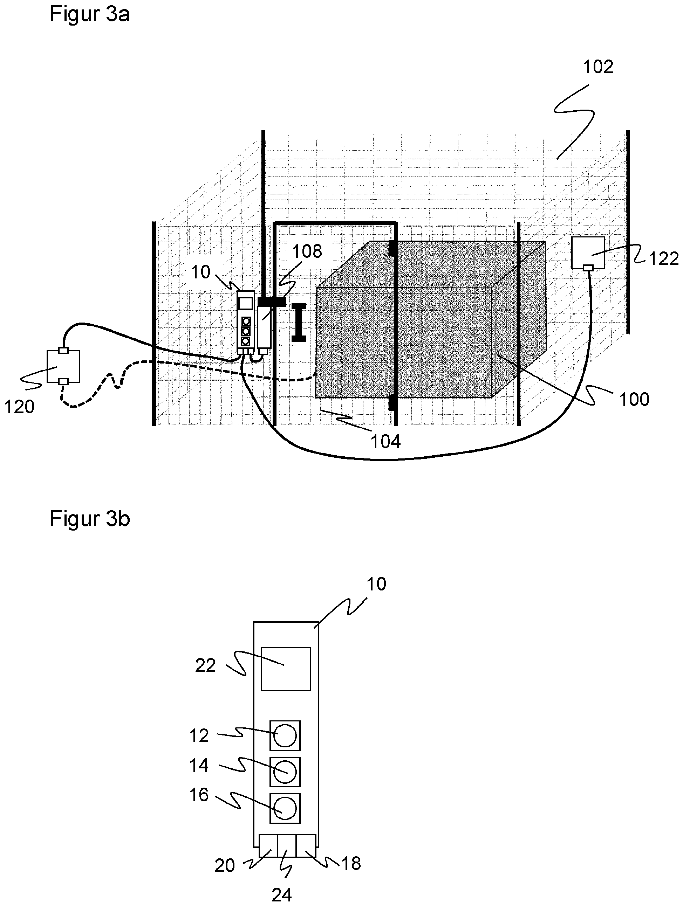

Die Figuren 3a-b illustrieren eine weitere Ausführungsform. Im Unterschied zu der Ausführungsform gemäß Figuren 2a-b weist die Bedienvorrichtung nun einen dritten sicheren Anschluss 24 zum Verbinden mit einem Stillstandswächter 122 auf. Der Stillstandswächter 122 bietet eine Alternative zu einer Wartezeit zwischen Stoppanforderung und Entriegelungsbefehl. Die Sicherheitslogik berücksichtigt somit keine vorgegebene oder konfigurierte Wartezeit, sondern reagiert auf das Signal des Stillstandswächters. Damit müssen keine Annahmen über Nachlaufzeiten und dergleichen getroffen und womöglich mit Sicherheitszuschlägen bestimmt werden, sondern es wird situationsbezogen von dem Stillstandswächter 122 festgestellt, wann die Maschine 100 keine gefahrbringenden Bewegungen mehr ausführt.

## Patentansprüche

1. Bedienvorrichtung (10) für eine Sicherheitszuhaltung (108) einer beweglichen trennenden Schutzeinrichtung (104) zum Absichern einer Maschine (100), wobei die Bedienvorrichtung (10) ein erstes Bedienelement (12) für eine Stoppanforderung an die Maschine (100), einen ersten sicheren Anschluss (18) für eine Verbindung mit der Sicherheitszuhaltung (108) und einen zweiten sicheren Anschluss (20) für eine Verbindung mit einer Sicherheitsschaltvorrichtung (120, 100) aufweist,
**dadurch gekennzeichnet,**
**dass** die Bedienvorrichtung (10) als ein Bedienmodul mit einer integrierten sicheren Steuereinheit (22) in einem gemeinsamen Gehäuse ausgebildet ist, so dass die Bedienvorrichtung (10) als Taster-Logikmodul ausgestaltet ist, in dem die erforderliche Sicherheitslogik in das Bauteil mit dem ersten Bedienelement (12) integriert ist und die Bedienvorrichtung (10) dafür ausgebildet ist, durch Betätigen des ersten Bedienelements (12) eine Stoppanforderung an dem zweiten Anschluss (20) zu erzeugen und damit ein Stillsetzen der Maschine (100) zu initiieren und dann einen Entriegelungsbefehl an dem ersten Anschluss (18) auszugeben, so dass nun die bewegliche trennende Schutzeinrichtung (104) geöffnet und der Bereich der Maschine (100) betreten werden kann, und dass die Bedienvorrichtung (10) ein zweites Bedienelement (14) für eine Rücksetzanforderung aufweist, wobei die sichere Steuereinheit (22) dafür ausgebildet ist, bei Betätigen des zweiten Bedienelements (14) einen Verriegelungsbefehl an dem ersten Anschluss (18) auszugeben, auf eine Bestätigung der Verriegelung der Sicherheitszuhaltung (108) zu warten und dann die Maschine (100) an dem zweiten Anschluss (20) freizugeben.

2. Bedienvorrichtung (10) nach einem der vorhergehenden Ansprüche,
die ein drittes Bedienelement (16) für eine Wiederanlaufanforderung aufweist.

3. Bedienvorrichtung (10) nach einem der vorhergehenden Ansprüche,
wobei die sichere Steuerungseinheit (22) fix programmiert ist, insbesondere die Abläufe bei Betätigen eines Bedienelements (12, 14, 16) nicht programmiert oder umprogrammiert werden können.

4. Bedienvorrichtung (10) nach einem der vorhergehenden Ansprüche,
wobei die sichere Steuerungseinheit (22) zum Konfigurieren von Parametern ausgebildet ist.

5. Bedienvorrichtung (10) nach Anspruch 4,
wobei die sichere Steuerungseinheit (22) als Parameter eine Wartezeit zwischen Stoppanforderung und Entriegelungsbefehl verwendet.

6. Bedienvorrichtung (10) nach einem der vorhergehenden Ansprüche,
die ein viertes Bedienelement zum Einstellen eines Parameters aufweist.

7. Bedienvorrichtung (10) nach einem der vorhergehenden Ansprüche,
die eine IO-Link-Schnittstelle zum Einstellen eines Parameters über IO-Link aufweist.

8. Bedienvorrichtung (10) nach einem der vorhergehenden Ansprüche,
die eine NFC-Schnittstelle zum Einstellen eines Parameters über NFC aufweist.

9. Bedienvorrichtung (10) nach einem der vorhergehenden Ansprüche,
die einen dritten Anschluss (24) für eine Verbindung mit einem Stillstandswächter (122) aufweist, wobei die sichere Steuerungseinheit (22) dafür ausgebildet ist, nach einer Stoppanforderung auf eine Stillstandsbestätigung am dritten Anschluss (24) zu warten, bevor ein Entriegelungsbefehl an dem ersten Anschluss (18) ausgegeben wird.

10. Sicherheitsvorrichtung mit einer Bedienvorrichtung (10) nach einem der vorhergehenden Ansprüche, einer an dem ersten Anschluss (18) mit der Bedienvorrichtung (10) verbundenen Sicherheitszuhaltung (108), die an einer beweglichen trennenden Schutzeinrichtung (104) montiert ist, und einer an dem zweiten Anschluss (20) mit der Bedienvorrichtung (10) verbundenen Sicherheitsschaltvorrichtung (120).

## Claims

1. An operating apparatus (10) for a safety lock (108) of a movable separating guard device (104) for safeguarding a machine (100), the operating apparatus (10) comprising a first operating element (12) for a stop request to the machine (100), a first safe connection (18) for a connection to the safety lock (108) and a second safe connection (20) for a connection to a safety switching device (120, 100),
**characterized in that** the operating apparatus (10) is configured as an operating module having an integrated safe control unit (22) in a common housing, so that the operating apparatus (10) is configured as a pushbutton logic module in which the required safety logic is integrated in the component with the first operating element (12), and the operating apparatus (10) is configured to generate a stop request at the second connection (20) by actuating the first operating element (12) and thus to initiate a shutdown of the machine (100) and then to output an unlock command at the first connection (18), so that the movable separating guard device (104) can now be opened and the area of the machine (100) can be entered, and **in that** the operating apparatus (10) comprises a second operating element (14) for a reset request, the safe control unit (22) being configured to output a locking command at the first connection (18) when the second operating element (14) is actuated, to wait for confirmation of the locking of the safety lock (108) and then to release the machine (100) at the second connection (20).

2. The operating apparatus (10) according to any of the preceding claims,
that comprises a third operating element (16) for a restart request.

3. The operating apparatus (10) according to any of the preceding claims,
wherein the safe control unit (22) is fixedly programmed, in particular the sequences upon actuation of an operating element (12, 14, 16) cannot be programmed or reprogrammed.

4. The operating apparatus (10) according to any of the preceding claims,
wherein the safe control unit (22) is configured to set parameters.

5. The operating apparatus (10) according to claim 4,
wherein the safe control unit (22) uses as a parameter a waiting time between stop request and unlock command.

6. The operating apparatus (10) according to any of the preceding claims,
that comprises a fourth operating element for setting a parameter.

7. The operating apparatus (10) according to any of the preceding claims,
that comprises an IO-Link interface for setting a parameter via IO-Link.

8. The operating apparatus (10) according to any of the preceding claims,
that comprises an NFC interface for setting a parameter via NFC.

9. The operating apparatus (10) according to any of the preceding claims,
that comprises a third connection (24) for a connection to a standstill monitor (122), wherein the safe control unit (22) is configured to wait for a standstill confirmation at the third connection (24) after a stop request before outputting an unlock command at the first connection (18).

10. A safety apparatus comprising an operating apparatus (10) according to any of the preceding claims, a safety lock (108) connected at the first connection (18) to the operating apparatus (10) and mounted on a movable separating guard device (104), and a safety switching device (120) connected at the second connection (20) to the operating apparatus (10).

## Revendications

1. Dispositif de commande (10) pour une serrure de sécurité (108) d'un dispositif de protection de séparation mobile (104) pour la protection d'une machine (100), le dispositif de commande (10) comprenant un premier élément de commande (12) pour une demande d'arrêt à la machine (100), une première connexion sécurisée (18) pour une connexion à la serrure de sécurité (108) et une deuxième connexion sécurisée (20) pour une connexion à un dispositif de commutation de sécurité (120, 100),
**caractérisé en ce que** le dispositif de commande (10) est configuré comme un module de commande avec une unité de commande de sécurité intégrée (22) dans un boîtier commun, de sorte que le dispositif de commande (10) est configuré comme un module logique à boutons-poussoirs dans lequel la logique de sécurité nécessaire est intégrée dans le composant avec le premier élément de commande (12), et que le dispositif de commande (10) est configuré pour générer une demande d'arrêt au niveau de la deuxième connexion (20) par l'actionnement du premier élément de commande (12) et ainsi initier un arrêt de la machine (100), puis pour émettre une commande de déverrouillage au niveau de la première connexion (18), de sorte que le dispositif de protection de séparation mobile (104) peut maintenant être ouvert et que la zone de la machine (100) peut être pénétrée, et **en ce que** le dispositif de commande (10) comprend un deuxième élément de commande (14) pour une demande de réin-itialisation, l'unité de commande de sécurité (22) étant configurée pour émettre une commande de verrouillage au niveau de la première connexion (18) lors de l'actionnement du deuxième élément de commande (14), pour attendre la confirmation du verrouillage de la serrure de sécurité (108) et pour libérer ensuite la machine (100) au niveau de la deuxième connexion (20).

2. Dispositif de commande (10) selon l'une des revendications précédentes,
qui comprend un troisième élément de commande (16) pour une demande de redémarrage.

3. Dispositif de commande (10) selon l'une des revendications précédentes, dans lequel l'unité de commande de sécurité (22) est programmée de manière fixe, en particulier les séquences lors de l'actionnement d'un élément de commande (12, 14, 16) ne peuvent pas être programmées ou reprogrammées.

4. Dispositif de commande (10) selon l'une des revendications précédentes,
dans lequel l'unité de commande de sécurité (22) est configurée pour régler des paramètres.

5. Dispositif de commande (10) selon la revendication 4,
dans lequel l'unité de commande de sécurité (22) utilise comme paramètre un temps d'attente entre la demande d'arrêt et la commande de déverrouillage.

6. Dispositif de commande (10) selon l'une des revendications précédentes, qui comprend un quatrième élément de commande pour le réglage d'un paramètre.

7. Dispositif de commande (10) selon l'une des revendications précédentes, qui comprend une interface IO-Link pour régler un paramètre via IO-Link.

8. Dispositif de commande (10) selon l'une des revendications précédentes, qui comprend une interface NFC pour régler un paramètre par NFC.

9. Dispositif de commande (10) selon l'une des revendications précédentes, qui comprend une troisième connexion (24) pour une connexion à un moniteur d'arrêt (122), dans lequel l'unité de commande de sécurité (22) est configurée pour attendre une confirmation d'arrêt sur la troisième connexion (24) après une demande d'arrêt avant d'émettre une commande de déverrouillage sur la première connexion (18).

10. Dispositif de sécurité avec un dispositif de commande (10) selon l'une des revendications précédentes, un verrou de sécurité (108) relié à la première connexion (18) au dispositif de commande (10) et monté sur un dispositif de protection de séparation mobile (104), et un dispositif de commutation de sécurité (120) relié à la deuxième connexion (20) au dispositif de commande (10).
